# EUROPEAN PATENT APPLICATION

(11) **EP 4 560 787 A1**
(43) Date of publication of application: **28.05.2025**
(21) Application number: 24213900.4
(22) Date of filing: 19.11.2024
(51) Int. Cl.: H01M 10/613, H01M 10/6556, H01M 10/6557, H01M 50/287, H01M 50/507, H01M 50/519

(54) **BATTERY MODULE AND VEHICLE**

(30) Priority: 22.11.2023 CN 202323168263 U; 30.05.2024 WO PCT/CN2024/096398
(71) Applicant: Eve Energy Co., Ltd., Huizhou, Guangdong 516006 (CN)
(72) Inventor: REN, Chaoju, Huizhou, Guangdong, 516006 (CN); ZHANG, Guojiang, Huizhou, Guangdong, 516006 (CN)
(74) Representative: Berggren Oy

(57) **Abstract**

A battery module includes a box (1100, 1300), a battery pack (104), CCS assemblies (1), and collection assemblies (106). The battery pack (104) is installed in the box (1100, 1300) and includes battery cells (103). Each CCS assembly (1) includes one collection line (11) electrically connected to some battery cells (103) and one connection circuit board (12) connected to one end of the collection line (11). The collection modules (106) include mounting brackets (2) and CSC assemblies (3, 4) in a one-to-one correspondence with the connection circuit boards (12). The mounting bracket (2) of each collection module (106) is installed in the box (1100, 1300) and is opposite to the battery pack (104). The CSC assemblies (3, 4) of each collection module (106) are disposed on a side of the mounting bracket (2) of the collection module (106) and directly electrically connected to corresponding one or more connection circuit boards (12).

## Description

### TECHNICAL FIELD

The present disclosure relates to the field of battery technologies, particularly to a battery module and a vehicle.

### BACKGROUND

Most of battery systems adopt such an assembly method in which multiple modules are connected in series and mounted on a tray. After collecting voltages and temperature signals of the modules, a cells contact system (CCS) assembly communicates with a cell supervision circuit (CSC) assembly through intermediate wiring harnesses.

### TECHNICAL PROBLEM

In related technology, the intermediate wiring harnesses include many wires and require complicated assembly. Besides, wire connection positions of the intermediate wiring harness are prone to poor contact, which in turn leads to abnormal collection and poor practicality of a battery management unit (BMU).

### TECHNICAL SOLUTIONS

In an aspect, the present disclosure provides a battery module. The battery module includes: a box, a battery pack, one or more CCS assemblies, and one or more collection modules. The battery pack is installed in the box and comprising multiple battery cells. The CCS assemblies include one or more collection lines electrically connected to the plurality of battery cells and a connection circuit board. Each CCS assembly includes one of the one or more collection lines and the connection circuit board is connected to one end of the collection line. Each collection module includes one of the one or more mounting bracket and one or more of the one or more CSC assemblies. The mounting bracket of each collection module is installed in the box and is opposite to the battery pack. The one or more CSC assemblies of each collection module are disposed on a side of the mounting bracket of the collection module and directly electrically connected to the connection circuit board.

In another aspect, the present disclosure further provides a vehicle. The vehicle includes a battery module. The battery module includes: a box, a battery pack, one or more CCS assemblies, and one or more collection modules. The battery pack is installed in the box and comprising multiple battery cells. The CCS assemblies include one or more collection lines electrically connected to the plurality of battery cells and a connection circuit board. Each CCS assembly includes one of the one or more collection lines and the connection circuit board is connected to one end of the collection line. Each collection module includes one of the one or more mounting bracket and one or more of the one or more CSC assemblies. The mounting bracket of each collection module is installed in the box and is opposite to the battery pack. The one or more CSC assemblies of each collection module are disposed on a side of the mounting bracket of the collection module and directly electrically connected to the connection circuit board.

### BENEFICIAL EFFECTS

In the battery module provided by some embodiments of the present disclosure, the mounting bracket is arranged to be opposite to the battery cells, to arrange the mounting bracket close to the CCS assembly, which facilitates direct connection between the connection circuit board and the CSC assembly mounted on the mounting bracket and eliminates the need for any intermediate wiring harness between the connection circuit board and the CSC assembly, thereby reducing unnecessary materials, improving assembly efficiency, and reducing costs.

### BRIEF DESCRIPTION OF THE DRAWINGS

FIG. 1 is a schematic diagram of a main body of a battery module according to some embodiments of the present disclosure.
FIG. 2 is an exploded view of the main body of the battery module according to some embodiments of the present disclosure.
FIG. 3 is a schematic diagram of cell supervision circuit (CSC) assemblies and cells contact system (CCS) assemblies according to some embodiments of the present disclosure.
FIG. 4 is a schematic diagram showing part of the CSC assemblies and CCS assemblies according to some embodiments of the present disclosure.
FIG. 5 is an enlarged view of the region A in FIG. 4.
FIG. 6 is a schematic diagram of the CSC assembly according to some embodiments of the present disclosure.
FIG. 7 is an exploded view of the CSC assembly according to some embodiments of the present disclosure.
FIG. 8 is an exploded view of a battery module according to some embodiments of the present disclosure.
FIG. 9 is a front view of the exploded view of the battery module shown in FIG. 8.
FIG. 10 is a left view of the exploded view of the battery module shown in FIG. 8.
FIG. 11 is a right view of the exploded view of the battery module shown in FIG. 8.
FIG. 12 is a top view of the exploded view of the battery module shown in FIG. 8.
FIG. 13 is a bottom view of the exploded view of the battery module shown in FIG. 8.

### List of reference signs:

1-CCS assembly; 11-collection line; 12-connection circuit board; 13-connection bar; 2-mounting bracket; 21-first mounting surface; 211-first fixing protrusion; 22-second mounting surface; 221-second fixing protrusion; 23-fixing lug; 24-mounting lug; 241-slit; 3-first CSC assembly; 30-collection plate; 31-first collection plate; 32-first connector; 321-first connection socket; 4-second CSC assembly; 41-second collection plate; 42-second connector; 421-second connection socket; 60-first heat conductive structure; 5-second heat conductive sheet; 6-first heat conductive sheet; 61-first section; 62-second section; 63-third section; 70-second heat conductive structure; 7-heat conductive foam; 8-buckle; 9-battery cell support; 10-liquid cooling plate; 101-connection structure; 102-electrically insulating board; 103-battery cell; 104-battery pack; 105-battery cell row; 106-collection module; 1000-battery module; 1100-top cover; 1200-bottom cover; 1310-crossbeam of the bottom cover; and 1320-slot.

### DETAILED DESCRIPTION

In the description of the present disclosure, it should be noted that unless otherwise explicitly specified and limited terms "interconnect", "connect", and "fix" should be understood in a broad sense. For example, a connection may be a fixed connection, a detachable connection, or an integral connection; may be a mechanical connection or an electrical connection; or may be a direct connection, an indirect connection through an intermediate medium, internal communication between two elements, or an interaction relationship between two elements. A person of ordinary skill in the art can understand specific meanings of the terms in the present disclosure according to specific situations.

In the present disclosure, unless otherwise explicitly stated and limited, a first feature being "above" or "below" a second feature includes the first feature directly contacting the second feature and the first feature contacting the second feature through an additional feature therebetween. Furthermore, the first feature being "on", "above", and "on top of" the second feature includes the first feature being directly above and diagonally above the second feature, and a horizontal level of the first feature being higher than a horizontal level of the second feature. The first feature being "under", "below", and "beneath" the second feature includes the first feature being directly below and diagonally below the second feature, and a horizontal level of the first feature being lower than a horizontal level of the second feature.

In the description of the present disclosure, it should be noted that terms "up", "down", "right", etc., indicate orientations or position relationships based on the accompanying drawings, which is only for the convenience of description and simplifying operations, and does not indicate or imply that indicated devices or elements should have particular orientations or be constructed and operated in particular orientations, and cannot be construed as a limitation on the present disclosure. In addition, terms "first" and "second" are only used to differentiate in description and have no special meaning.

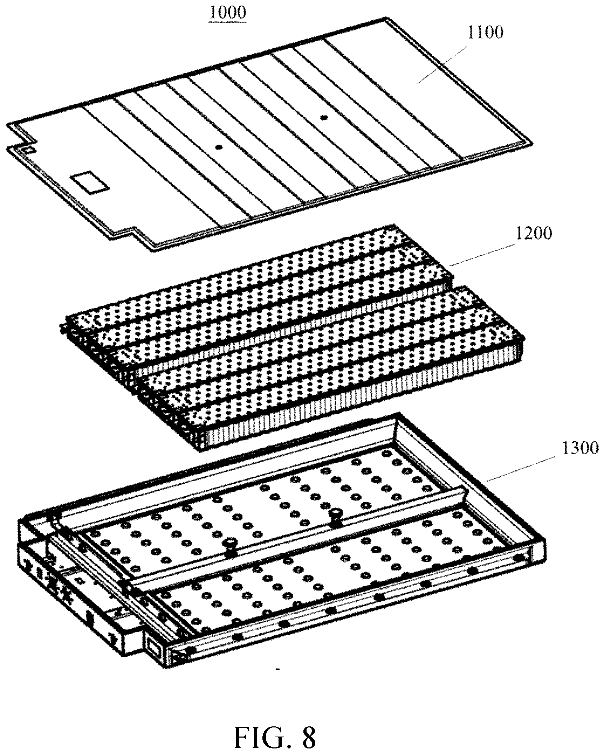

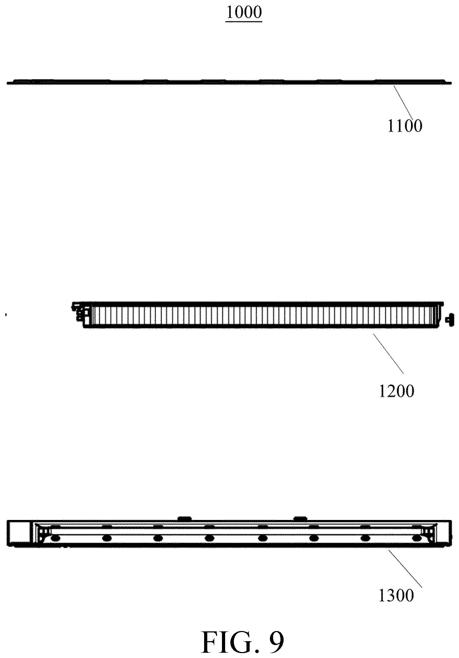

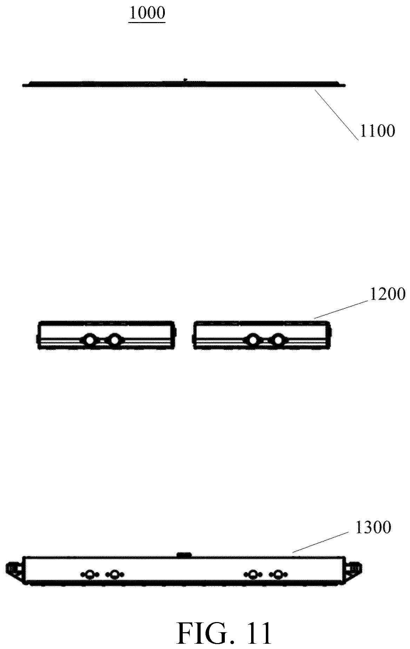

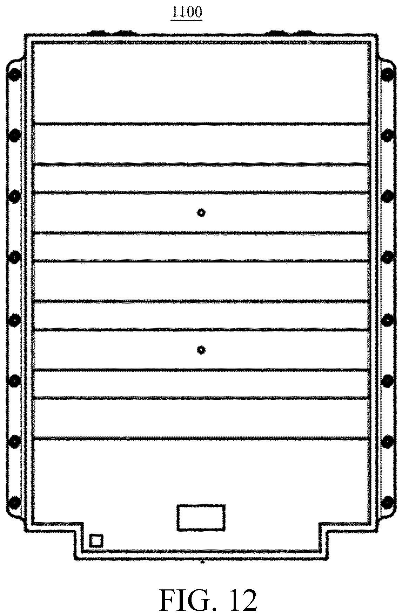

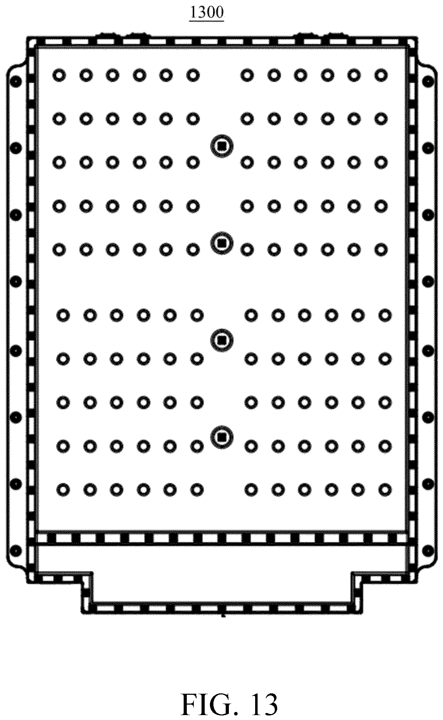

FIGS. 8-12 illustrate a battery module 1000 according to some embodiments of the present disclosure. As shown in Figures 8-13, the battery module 1000 includes a box and a main body 1200 installed in the box. The box includes a top cover 1100 and a bottom cover 1300. In some embodiments, the top cover 110, the main body 1200, and the bottom cover 1300 may be connected by means such as bolt connection, snap connection, etc., such that the main body 1200 of the battery module may be accommodated in the box.

### Embodiment 1

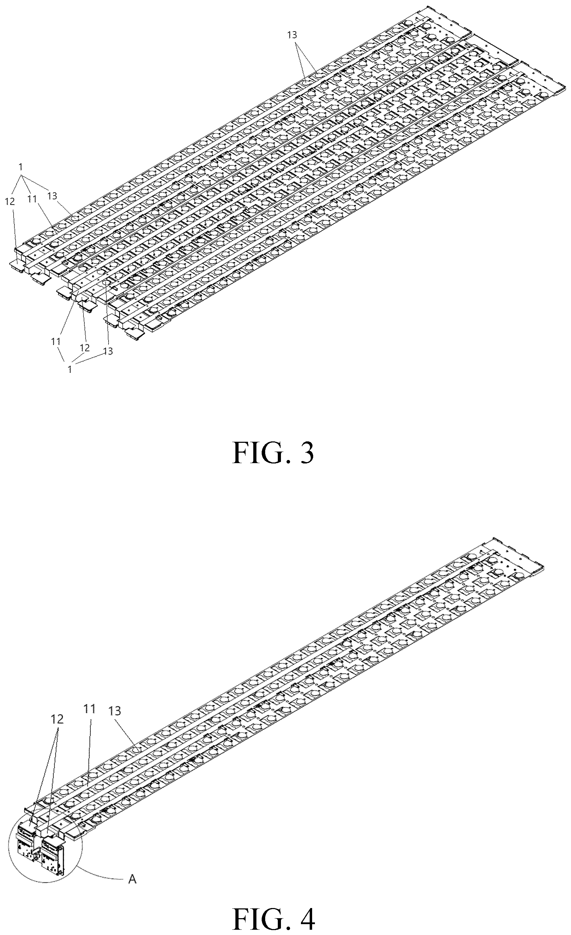

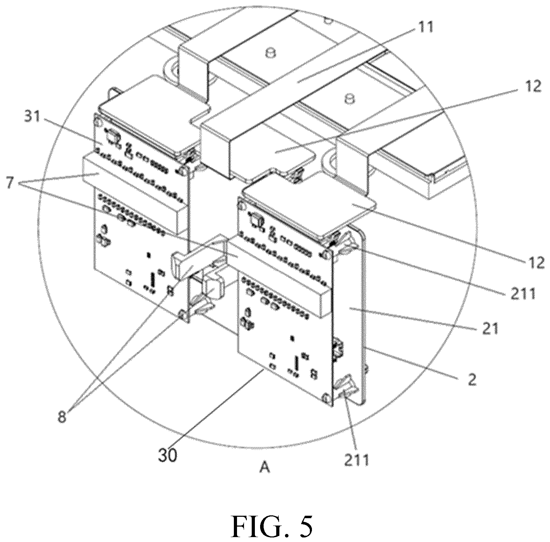

Referring to FIGS. 3-5, the main body 1200 of the battery module provided by some embodiments of the present disclosure includes: a battery pack 104, a cells contact system (CCS) assembly 1, and a collection module 106.

The battery pack 104 is installed in the box and includes a plurality of battery cells 103.

The CCS assembly 1 includes a collection line 11 configured to be electrically connected to the plurality of battery cells 103 and a connection circuit board 12 connected to one end of the connection line 11.

The collection module 106 includes a mounting bracket 2 and a cell supervision circuit (CSC) assembly. The mounting bracket 2 is installed in the box and is opposite to the battery pack 104. The CSC assembly is disposed on a side of the mounting bracket 2 and is directly electrically connected to the connection circuit board 12.

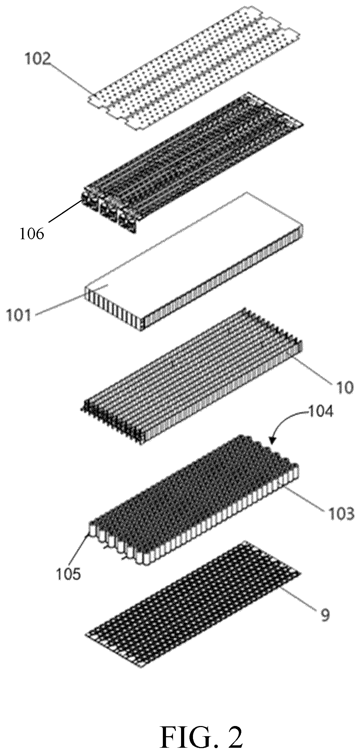

In some embodiments, referring to FIG. 2, the battery pack 104 includes a plurality of battery cell rows 105, the plurality of battery cell rows 105 are spaced apart from each other along a width direction of a connection structure 101, and each battery cell row 105 includes a plurality of the battery cells 103 which are arranged at intervals along a length direction of the connection structure 101.

Under the circumstances that multiple modules in the battery pack are connected in series in the prior art, after collecting voltages and temperature signals of the modules, a CCS assembly communicates with a CSC assembly through intermediate wiring harnesses, resulting in numerous wiring harnesses and complicated assembly. By arranging the mounting bracket 2 opposite to the plurality of battery cells 103 herein, the mounting bracket 2 is configured to be closer to the CCS assembly 1, and a distance between the connection circuit board 12 and the CSC assembly is shortened, thereby facilitating direct connection between the connection circuit board 12 and the CSC assembly mounted on the mounting bracket 2, eliminating the need for any intermediate transfer wiring harness between the connection circuit board 12 and the CSC assembly . Such structure is simple and easy to assemble.

### Embodiment 2

Referring to FIGS. 3-5, a battery module provided by some embodiments of the present disclosure includes a box, a battery pack 104, a plurality of CCS assemblies 1, and a collection module 106.

The battery pack 104 is disposed in the box and includes multiple battery cells 103. The battery cells 103 may be cylindrical batteries or prismatic batteries. The following embodiments will be described using cylindrical batteries as an example.

Each CCS assembly 1 include a collection line 11 configured to be electrically connected to a plurality of the battery cells 103 and a connection circuit board 12 connected to one end of the connection line 11.

The collection module 106 includes a mounting bracket 2 and a plurality of cell supervision circuit (CSC) assemblies. The mounting bracket 2 is installed in the box and is opposite to the battery pack 104. The CSC assemblies are each located on a side of the mounting bracket 2 and directly electrically connected to a corresponding connection circuit board 12.

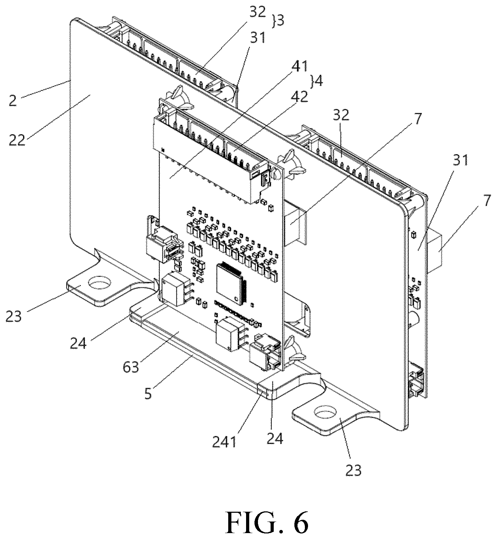

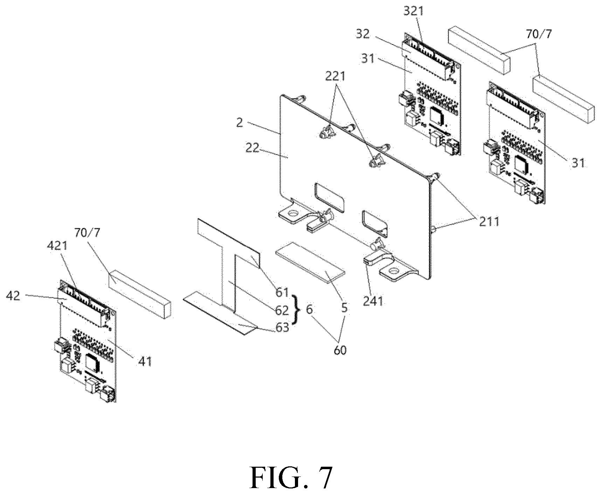

Referring to FIGS. 6-7, the plurality of CSC assemblies include one or more first CSC assemblies 3 and one or more second CSC assemblies 4. Each first CSC assembly 3 is disposed on a first mounting surface 21 of the mounting bracket 2, and each second CSC assembly 4 is disposed on a second mounting surface 22 of the mounting bracket 2. In this embodiment, two first CSC assemblies 3 are provided on the first mounting surface 21, and one second CSC assembly 4 is located between the two first CSC assemblies 3, and the second CSC assembly 4 and the two first CSC assemblies 3 are in a staggered arrangement. By arranging the plurality of CSC assemblies respectively on the first mounting surface 21 and the second mounting surface 22, a utilization ratio of mounting space of the mounting bracket 2 may be improved and a volume of the battery module may be reduced. In addition, the staggered arrangement of the CSC assemblies on the first mounting surface 21 and the second mounting surface 22 helps reduce thermal impact between the CSC assemblies and improve heat dissipation efficiency.

In some embodiments, each CSC assembly may include a collection plate 30 and a connector provided on one side of the first collection plate 30, and the connector is electrically connected to a corresponding connection circuit board 12. For example, each first CSC assembly 3 includes a first collection plate 31 and a first connector 32 provided on a side of the first collection plate 31. As another example, the second CSC assembly 4 includes a second collection plate 41 and a second connector 42 provided on a side of the second collection plate 41. The first mounting surface 21 is provided with a plurality of first fixing protrusions 211, and the second mounting surface 22 is provided with a plurality of second fixing protrusions 221. The first collecting plates 31 are each bolted to corresponding one or more of the plurality of first fixing protrusions 211 and maintain a distance from the first mounting surface 21. The second collection plate 41 is bolted to corresponding one or more of the plurality of second fixing protrusions 221 and maintains a distance from the second mounting surface 22.

Specifically, each of the first connectors 32 and the second connector 42 is electrically connected to the connection circuit board 12 of a corresponding CCS assembly 1. The first connectors 32 are each located between the corresponding first collection plate 31 and the first mounting surface 21, and the second collection plate 41 is located between the second connector 42 and the second mounting surface 22, to maximize mounting space on the mounting bracket 2 and facilitate the electrical connection between each of the first connectors 32 and the second connector 42 and the corresponding connection circuit board 12.

Referring to FIGS. 6-7, each first connector 32 is provided with a first connection socket 321 opening toward the corresponding CCS assembly 1, and the second connector 42 is provided with a second connection socket 421 opening toward the corresponding CCS assembly 1. The connection circuit board 12 of the CCS assembly 1 corresponding to a first connector 32 is inserted into the first connector 32. The connection circuit board 12 of the CCS assembly 1 corresponding to a second connector 42 is inserted into the second connector 42. Compared to the prior art where the collection lines need to extend to the side portion of the battery pack (for example, the connection sockets 321 or 421 is arranged to open toward a side of the mounting bracket 2 in its thickness direction), the collection lines 11 herein do not need to be bent too many times, thereby reducing damage to the collection lines 11.

Referring to FIG. 6-7, the second mounting surface 22 is provided with two fixing lugs 23 and two mounting lugs 24. The two mounting lugs 24 are located between the two mounting lugs 23. A surface of any one of the mounting lugs 24 facing the other mounting lug 24 is provided with a slit 241, and the slit 241 extends through the mounting lug 24 in a direction away from the second mounting surface 22.

The second CSC assembly 4 further includes a heat conductive member including a first heat conductive structure 60. The first heat conductive structure 60 includes a first heat conductive sheet 6 and a second heat conductive sheet 5.

The first heat conductive sheet 6 includes a second section 62 and a first section 61 and a third section 63 that are respectively connected to two ends of the second section 62. The first section 61 is arranged opposite to the second mounting surface 22.

The third section 63 is arranged at an angle with the second mounting surface 22. A middle portion of the third section 63 is connected to one end of the second section 62, and two ends of the third section 63 are disposed in the two slits 241 respectively. The first heat conductive sheet 6 is located between the two mounting lugs 24 and interference-fit with the two mounting lugs 24 and the mounting bracket 2. The second heat conductive sheet 5 is connected in a heat conductive manner between the third section 63 and a bottom of the box. The bottom of the box may be a crossbeam (i.e., a crossbeam 1310 of the bottom cover 1300) at the bottom of the box. The heat on the second collection plate 41 is transferred to the box through the first heat conductive sheet 6 and the second heat conductive sheet 5.

The reason for splitting the first heat conductive structure into the first heat conductive sheet 6 and the second heat conductive sheet 5 is that a limited volume of each mounting lug 24 makes it inconvenient to provide a larger slit 241 for both the third section 63 of the first heat conductive sheet 6 and the second heat conductive sheet 5 to snap in. Thus, only the third section 63 of the first heat conductive sheet 6 is disposed into the slit 24. Furthermore, a thickness of the second heat conductive sheet 5 may be adjusted according to a distance between the third section 63 and the bottom of the box for a smooth transfer of heat.

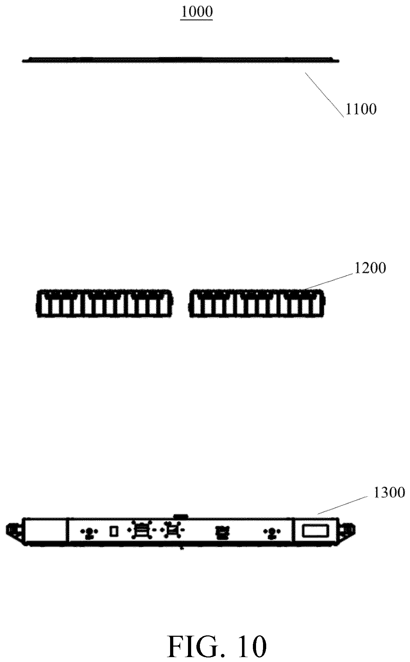

Specifically, the heat conductive member further includes a plurality of second heat conductive structures 70. In this embodiment, three second heat conductive structures 70 are provided, where two of the three second heat conductive structures 70 are respectively corresponding to the two first CSC assemblies 3, and each of the two second heat conductive structures 70 is provided between a surface of the first collection plate 31 of a corresponding first CSC assembly 3 away from the first mounting surface 21 and a side wall (for example, an inner wall of a left side of the bottom cover 1300, referring to FIG. 8 and FIG. 10) of the box; and one of the three second heat conductive structure 70 is connected in a heat conductive manner between the first section 61 of the first heat conductive sheet 6 and the second collection plate 41. More specifically, in this embodiment, the material of the second heat conductive structures 70 is heat conductive foam 7 which plays the role of heat conduction on the one hand, and the role of buffering external impact on the other hand.

In some embodiments, the two fixing lugs 23 are bolted to the crossbeam 1310 (as shown in FIG. 8) of the box. Specifically, the first mounting surface 21 of the mounting bracket 2 is further provided with buckles 8. The buckles 8 are snapped into a slot 1320 (as shown in FIG. 8) of the box. The two connection ways are used to realize fixed installation of the mounting bracket 2. The mounting bracket 2, the two fixing lugs 23, and the two mounting lugs 24 are integrally formed. In this embodiment, the third section 63 and the second mounting surface 22 form an included angle of 90°, and the first heat conductive sheet 6 and the second heat conductive sheet 5 are made of a same metal material.

Some embodiments of the present disclosure further provide a vehicle, including a battery module and a battery management system (BMS). The BMS is configured to be electrically connected to the one or more CSC assemblies to collect information of each cell and detect voltage and temperature of each cell.

### Embodiment 3

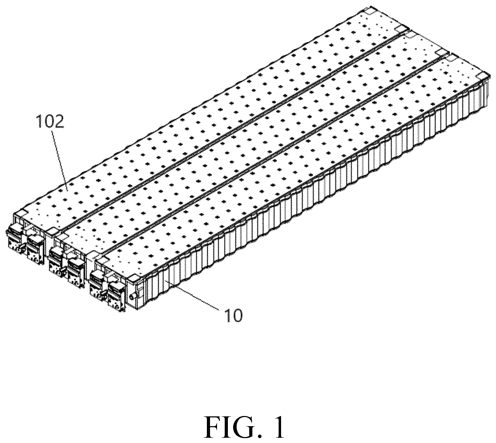

Referring to FIGS. 1-3, this embodiment provides a battery module. The battery module includes a box, a battery pack 104, a plurality of CCS assemblies 1, and a plurality of collection modules 106. The battery pack 104 includes a plurality of battery cell rows 105. The battery cell rows 105 are spaced apart along a width direction of a connection structure 101. Each battery cell row 105 includes a plurality of battery cells 103. The plurality of battery cells 103 are spaced apart along a length direction of the connection structure 101. In addition, the battery module further includes a battery cell support 9, a plurality of liquid cooling plates 10, a connection structure 101, and an electrically insulating board 102.

The plurality of battery cells 103 are arranged on the battery cell support 9. The battery cell support 9 is made of an electrically insulating material and plays the role of electrical insulation between the battery cells 103 and the box. The battery cell support 9 is provided with a plurality of openings each corresponding to one of the plurality of battery cells 103. The openings are configured as pressure relief valves to expose the battery cells 103. Two of the liquid cooling plates 10 are disposed on two sides of the battery pack 104 to cool the outermost battery cells 103 thereof. Other liquid cooling plates 10 are respectively disposed between the plurality of battery cells 103 to cool down the battery cells 103.

The plurality of battery cells 103 and the liquid cooling plates 10 are both arranged in the connection structure 101, and an upper surface of the connection structure 101 exposes the positive and negative poles of the plurality of battery cells 103. The battery cells 103 are separately arranged in the connection structure 101 to prevent the spread and diffusion of thermal runaway of a single battery cell 103. The connection structure 101 connects the multiple battery cells 103 and the multiple liquid cooling plates 10 into a whole, improving the overall strength of the battery module. Foam sealing agent is used as the material of the connection structure 101. In actual production, after the multiple battery cells 103 and the multiple liquid cooling plates 10 are placed according to the settings, the foam sealing agent is poured to fill the gaps between the multiple battery cells 103 and the multiple liquid cooling plates 10, realizing the integrated arrangement of the multiple battery cells 103 and the multiple liquid cooling plates 10.

The CCS assemblies 1 are electrically connected to the battery cells 103, and the electrically insulating board 102 covers the CCS assemblies 1.

Each CCS assembly 1 further includes a plurality of connection bars 13 each electrically connected to a corresponding collection line 11. The connection bars 13 connect adjacent battery cells 103 in series. The electrically insulating board 102 and the plurality of connection bars 13 are provided with exhaust holes, and the exhaust holes are configured for the foam overflow and gas exhaust during a foaming process of the foam sealing agent.

An actual assembly process of the battery module in this embodiment is as follows:
after stacking the battery cells 103 and the liquid cooling plates 10 on a tooling, installing the CCS assemblies 1 in place and performing necessary welding for electrical connections between the battery cells 103 and the CCS assemblies (e.g., welding the CCS assemblies to a pole on an end surface of the battery cells 103), applying structural adhesive on surfaces of the CCS assemblies 1, bonding the electrically insulating board 102 to the upper surfaces of the CCS assemblies 1, mounting the entire module on the battery cell support 9, and using glue to fix at positions where the battery cell support 9 contacts the battery cells 103. Then, the module is hoisted to put into the box, the collection modules 106 are installed in the box, and the connectors on the CCS assemblies 1 are respectively plugged into the connection circuit boards 12 of the corresponding collection modules 106, so that voltages and temperature signals of the battery cells 103 may be collected.

## Claims

1. A battery module, **characterized by** comprising:
a box (1100, 1300);
a battery pack (104) installed in the box (1100, 1300) and comprising multiple battery cells (103);
one or more CCS assemblies (1) comprising one or more collection lines (11) electrically connected to the plurality of battery cells (103) and a connection circuit board (12), wherein each CCS assembly (1) comprises one of the one or more collection lines (11), and the connection circuit board (12) is connected to one end of the collection line (11); and
one or more collection modules (106) comprising one or more mounting brackets (2) and comprising one or more CSC assemblies (3, 4), wherein each collection module (106) comprises one of the one or more mounting brackets (2) and one or more of the one or more CSC assemblies (3, 4), the mounting bracket (2) of each collection module (106) is installed in the box (1100, 1300) and is opposite to the battery pack (104), and the one or more CSC assemblies (3, 4) of each collection module (106) are disposed on a side of the mounting bracket (2) of the collection module (106) and directly electrically connected to the connection circuit board (12).

2. The battery module according to claim 1, wherein the one or more CSC assemblies (3, 4) of each collection module (106) comprise one or more collection plates (30) each provided on the mounting bracket (2) of the collection module (106), each CSC assembly (3, 4) comprising one of the one or more collection plates (30), and
the battery module further comprises a heat conductive member connected in a heat conductive manner between the box (1100, 1300) and the collection plate (30) of each CSC assembly (3, 4), and the mounting bracket (2) of each collection modules (106) is fixed to a bottom of the box (1100, 1300).

3. The battery module according to claim 1 or 2, wherein the mounting bracket (2) of at least one collection module (106) comprises a first mounting surface (21) and a second mounting surface (22) arranged opposite to each other, the second mounting surface (22) faces the battery pack (104), and there are two or more of the CSC assemblies (3, 4) respectively provided on the first mounting surface (21) and the second mounting surface (22).

4. The battery module according to claim 3, wherein there are three of the CSC assemblies (3, 4) provided on the first mounting surface (21) and the second mounting surface (22); wherein two CSC assemblies (3) of the CSC assemblies (3, 4) are provided on the first mounting surface (21), and one CSC assembly(4) of the CSC assemblies (3, 4) is provided on the second mounting surface (22), and the two CSC assemblies (3) and the one CSC assembly (4) are in a staggered arrangement.

5. The battery module according to claim 2, wherein the heat conductive member comprises one or more first heat conductive structures (60) connected in a heat conductive manner to the bottom of the box (1100, 1300) and the collection plates (30), and the one or more first heat conductive structures (60) are in a one-to-one correspondence with the one or more mounting brackets (2);
wherein each mounting bracket (2) is provided with two mounting lugs (24), and at least one of the mounting lugs (24) is provided with a slit (241), and
the first heat conductive structure (60) comprises a first heat conductive sheet (6) connected in a heat conductive manner between the bottom of the box (1100, 1300) and the collection plates (30), and the first heat conductive sheet (6) snaps into the slit (241) of a corresponding one of the one or more mounting bracket (2).

6. The battery module according to claim 5, wherein the mounting bracket (2) of each collection module (106) comprises a first mounting surface (21) and a second mounting surface (22) arranged opposite to each other, and the second mounting surface (22) faces the battery pack (104),
there are a plurality of the CSC assemblies (3, 4) respectively provided on the first mounting surface (21) and the second mounting surface (22),
the two mounting lugs (24) are provided on the second mounting surface (22),
the first heat conductive sheet (6) comprises a first section (61), a second section (62), and a third section (63), the second section (62) being connected between the first section (61) and the third section (63), and
the first section (61) is arranged to be opposite to the second mounting surface (22), the third section (63) is arranged at an angle with the second mounting surface (22), and the third section (63) snaps into the slit (241).

7. The battery module according to claim 6, wherein the first heat conductive structure (60) of each collection module (106) further comprises a second heat conductive sheet (5), the second heat conductive sheet (5) is connected in a heat conductive manner between the third section (63) and the bottom of the box (1100, 1300).

8. The battery module according to claim 6, wherein the heat conductive member further comprises a plurality of second heat conductive structures (70) corresponding to each mounting bracket (2), and at least one of the second heat conductive structures (70) each is connected in a heat conductive manner between a side wall of the box (1100, 1300) and a corresponding CSC assembly (3) of the plurality of CSC assemblies(3, 4) provided on the first mounting surface (21) of the mounting bracket (2), and at least one of the second heat conductive structures (70) is connected in a heat conductive manner between the first section (61) arranged opposite to the second mounting surface (22) of the mounting bracket (2) and the collection plate (30) of a corresponding CSC assembly (4) of the plurality of CSC assemblies(3, 4) provided on the second mounting surface (22) of the mounting bracket (2).

9. The battery module according to claim 6, wherein the CSC assemblies (3, 4) further comprise connectors (32, 42), each CSC assembly (3, 4) comprises one of the connectors (32, 42) provided on a side of the collection plate (30) of the CSC assembly (3, 4), and the connector (32, 42) is electrically connected to the connection circuit board (12);
wherein among the CSC assemblies (3, 4) corresponding to each mounting bracket (2):
at least one CSC assembly (3, 4) each has its connector (32) disposed between its collection plate (30) and the first mounting surface (21) of the mounting bracket (2), and
at least one CSC assembly (3, 4) each has its collection plate (30) disposed between its connector (42) and the second mounting surface (22) of the mounting bracket (2).

10. The battery module according to claim 9, wherein the first mounting surface (21) is provided with a plurality of first fixing protrusions (211), and the second mounting surface (22) is provided with a plurality of second fixing protrusions (221),
the collection plates (30) are respectively mounted on the plurality of first fixing protrusions (211) or the plurality of second fixing protrusions (221) and maintain a distance from the first mounting surface (21) or the second mounting surface (22).

11. The battery module according to claim 9, wherein the connector (32, 42) of each CSC assembly (3, 4) is provided with a connection socket (321, 421) opening toward a corresponding one of the one or more CCS assemblies (1), and the connection circuit board (12) corresponding to the CSC assembly (3, 4) is disposed in the connection socket (321, 421).

12. The battery module according to claim 6, wherein one or more buckles (8) are provided on the first mounting surface (21) of the mounting bracket (2), and the buckles (8) snap into the box (1100, 1300).

13. The battery module according to any one of claims 1 to 12, further comprising a battery cell support (9), wherein the plurality of battery cells (103) are mounted on the battery cell support (9), the battery cell support (9) is provided with a plurality of openings, and the plurality of openings and pressure relief valves of the plurality of battery cells (103) are configured to have a one-to-one correspondence.

14. The battery module according to any one of claims 1-12, further comprising a plurality of liquid cooling plates (10),
wherein the battery pack (104) comprises a plurality of battery cell rows (105), and each of the battery cell rows (105) comprises a plurality of the battery cells (103),
two or more of the liquid cooling plates (10) are provided on two sides of the battery pack (104), and one or more of the liquid cooling plates (10) are provided between two adjacent ones of the battery cell rows (105).

15. A vehicle, **characterized by** comprising the battery module according to any one of claims 1-14.
